# EUROPÄISCHE PATENTANMELDUNG

(11) **EP 1 037 444 A2**
(43) Veröffentlichungstag der Anmeldung: **20.09.2000**
(21) Anmeldenummer: 00105160.6
(22) Anmeldetag: 11.03.2000
(51) Int. Cl.: H04M 1/02

(54) **Handapparat für Telekommunikations-Endgeräte**

(30) Priorität: 16.03.1999 DE 29905220 U
(71) Anmelder: DeTeWe - Deutsche Telephonwerke Aktiengesellschaft & Co., 10997 Berlin (DE)
(72) Erfinder: Hahn, Max, 14163 Berlin (DE); Krebs, Kolja, 12051 Berlin (DE)

(57) **Zusammenfassung**

Die Erfindung betrifft einen Handapparat für Telekommunikations-Endgeräte mit einem Gehäuse zur Aufnahme einer elektronischen Baugruppe und eines Akkumulators oder einer Batterie, insbesondere für schnurlose Telefone und Mobiltelefone. Ein Teil des Gehäuses ist als Schiebedeckel ausgebildet und das Gehäuse und der Schiebedeckel sind formschlüssig über Führungsschienen miteinander verbunden und der Schiebedeckel ist in Längsrichtung der Führungsschienen gegenüber dem Gehäuse verschiebbar.

## Beschreibung

Die Erfindung bezieht sich auf einen Handapparat für Telekommunikations-Endgeräte mit einem Gehäuse zur Aufnahme einer elektronischen Baugruppe und eines Akkumulators oder einer Batterie, insbesondere für schnurlose Telefone oder Mobiltelefone (Handys).

Handapparate von Telekommunikations-Endgeräten weisen ein Gehäuse auf, das vorzugsweise aus zwei Gehäuseschalen, insbesondere einer unteren Gehäuseschale (Bodenwanne) und einer oberen Gehäuseschale (Gehäusekappe), zusammengesetzt ist, die durch Rast- und/oder Schraubelemente lösbar miteinander verbunden sind. Die Gehäuseschalen umschließen eine elektronische Baugruppe, die vorzugsweise auf einer Leiterplatte angeordnet ist, sowie einen Akkumulator oder eine Batterie zur Stromversorgung des Handapparates.

Die obere Gehäuseschale weist Öffnungen zur Aufnahme einer Hörkapsel und eines Mikrofons sowie eines Displays und mehrerer Tasten zur Eingabe von Steuerinformationen und alphanumerischen Daten, wie beispielsweise eine Speicher-, Kurzwahl-, Auflegen-, Intern-, Wahlwiederholungs-, Abheben- und Paging-Taste, auf.

Die untere Gehäuseschale, die i.a. die Rückseite des Handapparates bildet, weist eine Öffnung oder Schlitze für einen Tonruflautsprecher sowie einen Klappdeckel oder einen abnehmbaren Deckel für ein im Innern des Gehäuses gebildetes Fach zur Aufnahme des Akkumulators oder einer Batterie auf.

Die lösbare Verbindung der beiden Gehäuseschalen mittels Rast- und/oder Schraubelemente in Verbindung mit einem abnehmbaren oder klappbaren Deckel für das Akkumulator- oder Batteriefach ist sowohl bezüglich des Bedienungskomforts des Benutzers als auch bezüglich der Sicherheit gegen unbefugtes Eingreifen in die elektronische Baugruppe nachteilig. Die Rast- oder Schraubelemente sind auch von einem Nicht-Fachmann zu öffnen, so daß Manipulationen durch den Laien ermöglicht werden, die die Funktionsfähigkeit des Handapparates beeinträchtigen oder zerstören können. Da die Gehäuseschalen üblicherweise aus Kunststoff hergestellt sind, besteht bei den Rastelementen zusätzlich die Gefahr der Zerstörung, so daß die Gehäuseschalen nicht mehr fest miteinander verbindbar sind.

Die Abdeckung des Akkumulator- oder Batteriefaches mittels eines abnehmbaren Deckels ist für den Benutzer wegen des häufig schwierigen Lösens des Deckels sowie zum Schließen problematischen Einfädelns des Deckels in die dafür vorgesehenen Verbindungszungen oder -haken am Gehäuse und am Deckel wenig komfortabel und bezüglich eines Klappdeckels konstruktiv aufwendig.

Aufgabe der vorliegenden Erfindung ist es, einen einfachen Akkumulator- oder Batteriewechsel für den Benutzer zu ermöglichen, eine auch nach mehrfachem Öffnen des Gehäuses sichere Verbindung sowie eine vor unbefugtem Zugriff geschützte Anordnung der elektronischen Baugruppe des Handapparates zu gewährleisten und die Voraussetzungen für eine optisch kompakte Gestaltung des Gehäuses des Handapparates zu schaffen.

Diese Aufgabe wird erfindungsgemäß durch das kennzeichnende Merkmal des Anspruchs 1 gelöst.

Die erfindungsgemäße Lösung gewährleistet einen einfachen Akkumulator- oder Batteriewechsel für den Benutzer, eine auch nach mehrfachem Öffnen des Gehäuses sichere Verbindung zwischen Abdeckung und Gehäuse sowie eine vor unbefugtem Zugriff geschützte Anordnung der elektronischen Baugruppe im Gehäuse des Handapparates.

Weiterhin werden mit der erfindungsgemäßen Lösung die Voraussetzungen für eine optisch kompakte Gestaltung des Gehäuses mit minimalen Außenabmessungen des Handapparates geschaffen.

Aus der DE 195 07 733 A1 ist es zwar bekannt, die Längsseiten der oberen Gehäuseschale mit Kufen zu versehen, diese dienen jedoch dazu, bei der Verbindung mit der unteren Gehäusehälfte einen dichten Abschluß der Trennfuge durch die formschlüssig ineinandergreifenden, umlaufenden Konturen der Gehäusehälften zu erreichen, wobei die beiden Gehäusehälften senkrecht zu ihrer Längserstreckung miteinander verbunden werden, so daß entsprechende Rastelemente miteinander verhaken können.

Bei Handapparaten mit hohem Energieverbrauch wie Mobiltelefonen (Handys) ist es bekannt, an das nur die elektronische Baugruppe umschließende Gehäuse einen Akkumulator über Schwalbenschwanzführungen anzusetzen und über an den aneinandergrenzenden Gehäuseseiten angeordnete Kontakte zur Stromversorgung der elektronischen Baugruppe miteinander zu verbinden. Bei einer derartigen Konstruktion treten jedoch nicht die vorstehend dargestellten Probleme bei Handapparaten für Telekommunikations-Endgeräte auf, da die elektronische Baugruppe ohnehin im unzugänglichen und vom Akkumulator abgetrennten Gehäuse angeordnet ist und das Wechseln des Akkumulators oder der Batterie für den Benutzer durch das Anflanschen des Akkumulators an das Gehäuse bewerkstelligt wird.

Eine vorteilhafte Ausgestaltung der erfindungsgemäßen Lösung ist dadurch gekennzeichnet, daß der Schiebedeckel die Rückseite eines im wesentlichen quaderförmigen Gehäuses bildet und die Führungsschienen parallel zu den Längsseiten des quaderförmigen Gehäuses verlaufen.

Diese Ausgestaltung der erfindungsgemäßen Lösung ermöglicht einen langen Verstellweg des Schiebedeckels und schafft somit die Voraussetzung für eine partielle Öffnung des Gehäuses unter Erhalt einer stabilen Verbindung zwischen dem Gehäuse und dem Schiebedeckel.

Das Gehäuse kann entweder aus zwei durch Rast- und/oder Schraubelemente lösbar miteinander verbundenen Gehäusehälften zusammengesetzt sein, wobei der Schiebedeckel die Bodenfläche der einen Gehäusehälfte bildet, oder aus einer quaderförmigen Wanne bestehen, deren offene Fläche mittels des Schiebedeckels verschließbar ist.

Eine weiter vorteilhafte Ausgestaltung der erfindungsgemäßen Lösung ist dadurch gekennzeichnet, daß der Schiebedeckel und das Gehäuse an ihren Stirnseiten, zu der der Schiebedeckel zu öffnen ist, parabelförmig zusammenlaufen.

Diese Ausgestaltung erleichtert das Zusammenführen von Schiebedeckel und Gehäuse bei vollständig vom Gehäuse entfernten Schiebedeckel und vermittelt den optischen Gesamteindruck eines eleganten Gehäuses mit geringen Außenabmessungen.

Zur Erleichterung der Handhabung beim Öffnen und Schließen weist der Schiebedeckel an der Kante, die der den Anschlag des Schiebedeckels bildenden Stirnseite des Gehäuses zugewandt ist, eine Griffmulde auf.

Eine Weiterbildung der erfindungsgemäßen Lösung ist dadurch gekennzeichnet, daß in Verschieberichtung des Schiebedeckels Sperrelemente angeordnet sind, die ein weiteres Verschieben des Schiebedeckels in Verschieberichtung blockieren. Insbesondere werden die Sperrelemente in Verschieberichtung des Schiebedeckels nach dem Öffnen eines Faches zum Einlegen eines Akkumulators oder einer Batterie angeordnet.

Die nur teilweise Freigabe des Gehäuseinneren ermöglicht es, für den Benutzer zugängliche Bereiche wie ein Akkumulator- oder Batteriefach zum Auswechseln dieser Energiespeicher des Handapparates von solchen Bereichen zu trennen, die nur dem Fachmann für Reparatur-, Wartungs- oder Einstellzwecke zugänglich sein sollen. Können die Sperrelemente nach einer weiterführenden Ausgestaltung der Erfindung nur mittels eines Spezialwerkzeugs oder mittels vorgegebener Betätigungsrichtungen und/oder Abfolge von Betätigungen bewegt werden, um das Blockieren des Schiebedeckels in Verschieberichtung aufzuheben, so wird die Gefahr eines unbefugten Eingriffs des Benutzers in den Bereich der elektronischen Baugruppe wirksam behindert.

Anhand eines in der Zeichnung dargestellten Ausführungsbeispieles soll der der Erfindung zugrundeliegende Gedanke näher erläutert werden. Es zeigen:
- Figur 1 -: eine perspektivische Rückseitenansicht eines Handapparates mit einem das Gehäuse des Handapparates verschließenden Schiebedeckel;
- Figur 2 -: eine perspektivische Darstellung des in Figur 1 dargestellten Handapparates mit offenem Akkumulator- oder Batteriefach;
- Figur 3 -: eine perspektivische Außenansicht der die Bedienungs- und Anzeigeelemente enthaltenden Gehäuseschale und
- Figur 4 -: eine perspektivische Innenansicht der Gehäuseschale gemäß Figur 3.

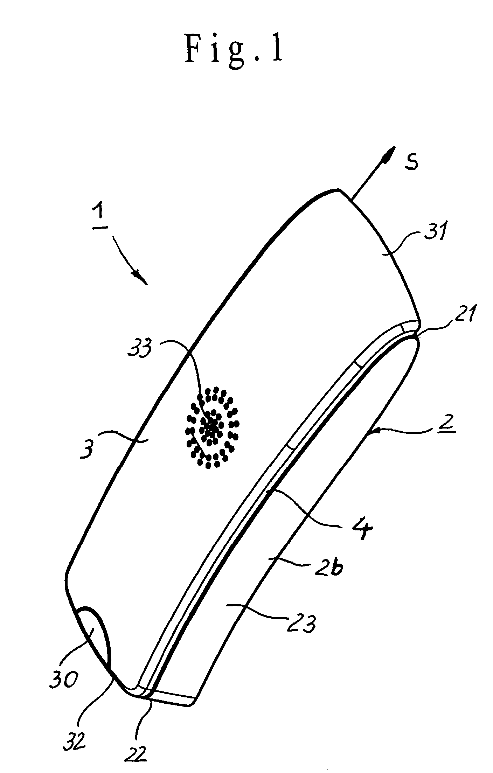

Figur 1 zeigt in perspektivischer Darstellung die Rückseitenansicht eines Handapparates für Telekommunikations-Endgeräte, insbesondere für Handapparate 1 für schnurlose Telefone oder für Mobiltelefone mit einem Gehäuse 2, das mittels eines Schiebedeckels 3 verschließbar ist.

Die Verbindung zwischen dem Schiebedeckel 3 und dem Gehäuse 2 erfolgt mittels Führungsschienen 4, die an den beiden Längsseiten des quaderförmigen Gehäuses 2 mit entsprechenden Führungsschienenelementen am Schiebedeckel 3 angeordnet sind. Die Führungsschienen 4 bilden eine formschlüssige Verbindung zwischen Schiebedeckel 3 und Gehäuse 2 durch wechselseitiges Verkrallen der Führungsschienenelemente, was eine Verschiebung in Richtung des Pfeiles S ermöglicht, eine Trennung zwischen Schiebedeckel 3 und Gehäuse 2 senkrecht zur Verschieberichtung aber verhindert.

Der Schiebedeckel 3 weist eine Griffmulde 30 an der Kante 32 des Schiebedeckels 3 auf, die im verschlossenen Zustand des Handapparates 1 an der Stirnseite 22 des Gehäuses 2 anliegt. Die gegenüberliegende Stirnseite wird durch konvergierende Flächen des Schiebedeckels 3 und des Gehäuses 2 gebildet, so daß eine parabelförmige Stirnseite 21, 31 von Schiebedeckel 3 und Gehäuse 2 gebildet wird.

Weiterhin weist der Schiebedeckel 3 Öffnungen bzw. Schlitze 33 auf, die im Bereich der Membran des Tonruflautsprechers angeordnet sind.

Die Seitenflächen 23 des Gehäuses 2 werden entweder bei einteiliger Ausführung des Gehäuses 2 durch eine Wannenform des Gehäuses 2 gebildet oder in zweiteiliger Ausführung durch eine obere und untere Gehäuseschale, die über Rast- und/oder Schraubelemente miteinander verbindbar sind. Bei einer wannenartigen Ausbildung des Gehäuses 2 weisen die oberen, der offenen Seite des Gehäuses 2 benachbarten Kanten die entsprechenden Führungsschienenelemente auf, die formschlüssig in Führungsschienenelemente des Schiebedeckels 3 eingreifen, während bei einer zweischaligen Ausgestaltung des Gehäuses 2 die die elektronische Baugruppe aufnehmende Gehäuseschale mit entsprechenden Führungsschienenelementen versehen ist und über Rast- und/oder Schraubelemente mit der oberen Gehäuseschale des Gehäuses 2 verbindbar ist.

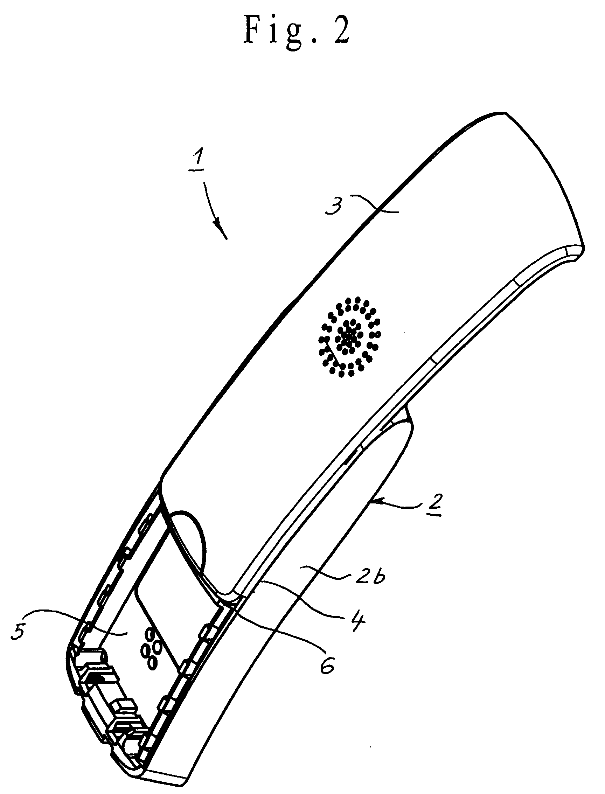

Figur 2 zeigt eine perspektivische Ansicht des Handapparates 1 mit teilweise geöffnetem Schiebedeckel 3, so daß ein Akkumulator- oder Batteriefach 5 zum Auswechseln eines Akkumulators oder einer Batterie freigegeben wird. Die Verschiebung des Schiebedeckels 3 erfolgt auf den Führungsschienen 4 bis zum Anschlag an Sperrelemente 6, die so angeordnet sind, daß das Akkumulator- oder Batteriefach 5 freigegeben, der darauffolgende Teil der elektronischen Baugruppe aber durch den Schiebedeckel 3 abgedeckt bleibt.

Die Sperrelemente 6 können im Bereich der Führungsschienen 4 oder an jeder beliebigen Stelle zwischen den Führungsschienen 4 angeordnet sein. Überlicherweise werden federnde Haken oder Elemente einer Rastmechanik verwendet, die mittels eines Spezialwerkzeugs oder durch eine vorgegebene Betätigungsabfolge verstellbar sind, so daß der weitere Verschiebeweg des Schiebedeckels 3 auf den Führungsschienen 4 freigegeben wird. Ein solches Spezialwerkzeug ist beispielsweise aus der DE 295 05 634 U1 bekannt und besteht aus einem Schieber, der auf der einen Seite mit einer Griffleiste und auf der anderen Seite mit Zungen versehen ist, die im Abstand der Sperrelemente am Gehäuse 2 angeordnet sind.

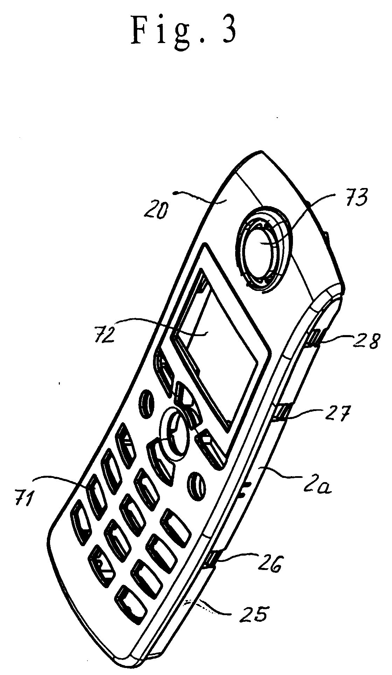

Figur 3 zeigt eine perspektivische Ansicht der Vorderseite 20 einer oberen Gehäuseschale 2a mit darin angeordneten Öffnungen 71 für Dateneingabe- und Steuertasten, einer Öffnung 72 für ein Display und einer Öffnung 73 für eine Hörkapsel mit optischer Signaleinrichtung. Die Seitenwände 25 der Gehäuseschale 2a weisen Rastelemente 26, 27, 28 auf, die mit einer unteren Gehäuseschale 2b formschlüssig verbindbar sind, so daß das in den Figuren 1 und 2 dargestellte Gehäuse 2 gebildet wird.

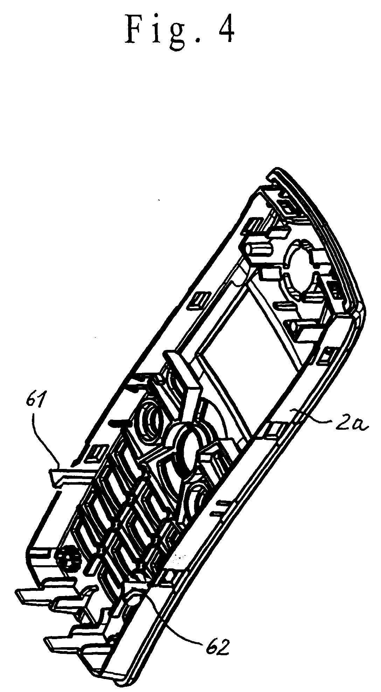

Figur 4 zeigt eine perspektivische Rückseitenansicht der Vorderseite 20 der oberen Gehäuseschale 2a, die mit Rasthaken 61, 62 versehen ist, die den Verschiebeweg des Schiebedeckels 3 zur Freigabe des Akkumulator- oder Batteriefachs 5 gemäß den Figuren 1 und 2 begrenzen. Durch eine Schwenkbewegung der Rasthaken 61, 62 wird die Sperre aufgehoben und der Schiebedeckel 3 kann entlang den Führungsschienen 4 gemäß den Figuren 1 und 2 weiter in Verschieberichtung S (Figur 1) verschoben werden, um die elektronische Baugruppe für Reparatur- oder Einstellzwecke freizugeben. Da die Bedienung der Rasthaken 61, 62 nur dem Fachmann geläufig ist, wird somit ein Eingriff durch den Benutzer in dem Bereich der elektronischen Baugruppe vermieden.

Die Erfindung beschränkt sich in ihrer Ausführung nicht auf die vorstehend angegebenen bevorzugten Ausführungsbeispiele, sondern es ist eine Anzahl von Varianten denkbar, welche von der in der Zeichnung und Beschreibung dargestellten Lösung auch bei grundsätzlich andersgearteten Ausführungen Gebrauch macht.

## Patentansprüche

1. Handapparat für Telekommunikations-Endgeräte mit einem Gehäuse zur Aufnahme einer elektronischen Baugruppe und eines Akkumulators oder einer Batterie, insbesondere für schnurlose Telefone oder Mobiltelefone,
**dadurch gekennzeichnet,**
daß ein Teil des Gehäuses (2) als Schiebedeckel (3) ausgebildet ist und daß das Gehäuse (3) und der Schiebedeckel (3) formschlüssig über Führungsschienen (4) miteinander verbunden sind und der Schiebedeckel (3) in Längsrichtung der Führungsschienen (4) gegenüber dem Gehäuse (2) verschiebbar ist.

2. Handapparat nach Anspruch 1, **dadurch gekennzeichnet,** daß der Schiebedeckel (3) die Rückseite eines im wesentlichen quaderförmigen Gehäuses (2) bildet.

3. Handapparat nach Anspruch 1 oder 2, **dadurch gekennzeichnet,** daß die Führungsschienen (4) parallel zu den Längsseiten des quaderförmigen Gehäuses (2) verlaufen.

4. Handapparat nach mindestens einem der vorangehenden Ansprüche, **dadurch gekennzeichnet,** daß das Gehäuse (2) aus zwei durch Rast- und/oder Schraubelemente lösbar miteinander verbundenen Gehäusehälften (2a, 2b) zusammengesetzt ist, und daß der Schiebedeckel (3) die Bodenfläche der einen Gehäusehälfte (2b) bildet.

5. Handapparat Handapparat nach mindestens einem der vorangehenden Ansprüche 1 bis 3, **dadurch gekennzeichnet,** daß das Gehäuse (2) aus einer quaderförmigen Wanne besteht, deren offene Fläche mittels des Schiebedeckels (3) verschließbar ist.

6. Handapparat nach mindestens einem der vorangehenden Ansprüche, **dadurch gekennzeichnet,** daß der Schiebedeckel (3) und das Gehäuse (2) an ihren Stirnseiten (21, 31), zu der der Schiebedeckel (3) zu öffnen ist, parabelförmig zusammenlaufen.

7. Handapparat nach mindestens einem der vorangehenden Ansprüche, **dadurch gekennzeichnet,** daß der Schiebedeckel (3) an der Kante (32), die der den Anschlag des Schiebedeckels (3) bildenden Stirnseite (22) des Gehäuses (2) zugewandt ist, eine Griffmulde (30) aufweist.

8. Handapparat nach mindestens einem der vorangehenden Ansprüche, **dadurch gekennzeichnet,** daß in Verschieberichtung (S) des Schiebedeckels (3) Sperrelemente (6; 61, 62) angeordnet sind, die ein weiteres Verschieben des Schiebedeckels (3) in Verschieberichtung (S) blockieren.

9. Handapparat nach Anspruch 8, **dadurch gekennzeichnet**, daß die Sperrelemente (6; 61, 62) an den oder im Bereich der Führungsschienen (4) angeordnet sind.

10. Handapparat nach Anspruch 8 oder 9, **dadurch gekennzeichnet,** daß die Sperrelemente (6; 61, 62) mittels eines Spezialwerkzeugs derart bewegbar sind, daß das Blockieren des Schiebedeckels (3) in Verschieberichtung (S) aufgehoben wird.

11. Handapparat nach Anspruch 8 oder 9, **dadurch gekennzeichnet,** daß die Sperrwirkung der Sperrelemente (6; 61, 62) mittels vorgegebener Betätigungsrichtungen und/oder Abfolge von Betätigungen aufhebbar ist.

12. Handapparat nach mindestens einem der vorangehenden Ansprüche, **dadurch gekennzeichnet,** daß die Sperrelemente (6; 61, 62) in Verschieberichtung (S) des Schiebedeckels (3) nach dem Öffnen eines Faches (5) zum Einlegen eines Akkumulators oder einer Batterie angeordnet sind.
